# EUROPÄISCHE PATENTSCHRIFT

(11) **EP 3 220 116 B1**
(45) Veröffentlichungstag und Bekanntmachung des Hinweises auf die Patenterteilung: **01.09.2021**
(21) Anmeldenummer: 17161928.1
(22) Anmeldetag: 20.03.2017
(51) Int. Cl.: G01L 5/22, G01L 5/28, G01L 1/22

(54) **KRAFTSENSORVORRICHTUNG**
FORCE SENSOR DEVICE
DISPOSITIF DE CAPTEUR DE FORCE

(30) Priorität: 18.03.2016 DE 102016105126
(43) Veröffentlichungstag der Anmeldung: 20.09.2017
(73) Patentinhaber: First Sensor Mobility GmbH, 01099 Dresden (DE)
(72) Erfinder: Petersen, Lars, 01129 Dresden (DE); Hagedorn, Sebastian, 01309 Dresden (DE)
(74) Vertreter: Lippert Stachow Patentanwälte Rechtsanwälte Partnerschaft mbB

(56) Entgegenhaltungen:
- EP-A1- 1 462 784
- EP-A1- 2 546 625
- EP-A2- 1 980 832

## Beschreibung

Die Erfindung betrifft allgemein einen Kraftsensor zur Messung von axial auftretenden Kräften. Sie betrifft insbesondere einen solchen Kraftsensor, bei welchem eine Messachse parallel zu einer Achse des Kraftsensors verläuft.

Zur Steuerung oder Regelung einer Krafteinwirkung wird regelmäßig ein Kraftsensor verwendet, der im Kraftfluss der einzustellenden Kraft oder derart anordnet ist, dass die einzustellende Kraft direkt oder mittels geeigneter Übertragungsmittel indirekt auf den Sensor einwirkt. Als Sensoren werden allgemein solche Vorrichtungen bezeichnet, welche eine Messgröße, im vorliegenden Fall mit der Kraft in Verbindung stehende Messgröße, qualitativ oder quantitativ erfasst und in ein weiterverarbeitbares elektrisches Signal umformt, so dass es der Steuerung oder Regelung der Krafteinwirkung zur Verfügung steht. Derartige Kraftsensoren werden in den unterschiedlichsten Anwendungen benötigt, beispielsweise für elektromechanische Bremsen im Kraftfahrzeugbereich, bei denen die Bremskraft, die auf die Bremsbacken einwirkt, mittels eines Kraftsensors erfasst und geregelt wird.

Aus dem Stand der Technik sind Kraftsensoren bekannt, die als Ring ausgebildet und auf einer Welle, Achse, Stempel oder einem anderem, zylindrischen, die Kraft übertragendem Bauteil angeordnet sind. In der US 8,733,182 B2 wird beispielsweise ein ringförmiger Kraftsensor beschrieben, bei welchem eine axial wirkende Kraft die Kraftangriffsfläche verformt und diese Verformung durch Detektoren auf dieser Fläche ermittelt wird.

Aufgrund der vielfältigen Anwendungsformen eines Kraftsensors soll die "zylindrische" Form des Bauteils, welches den ringförmigen Kraftsensor trägt, in seiner allgemeinen Definition verstanden sein, und zwar als Mantelfläche, die aus einer Vielzahl von Mantellinien gebildet wird, welche gleiche Punkte von zwei gleichen, geschlossenen und zueinander um die Länge der Mantellinie parallel verschobenen Kurven miteinander verbindet. Die geschlossenen Kurven können Kreise eines Kreiszylinders oder Ellipsen eines elliptischen Zylinders oder frei Kurven sein. Der ringförmige Kraftsensor ist anschaulich der Form der Mantelfläche angepasst.

Infolge der direkten oder indirekten Krafteinleitung in den ringförmigen Kraftsensor verformt sich dieser, so dass die zu messende Kraft auf Weg- oder Längenänderung zurückzuführen und die Kraft aus der Kraft-Weg-Relation zu ermitteln ist. Beispielsweise ist in der DE 103 50 085 A1 die Steuerung der Bremskraft von Bremsbacken beschrieben. Darin ist ein kreisringförmiger Kraftsensor, welcher einen C-förmigen Querschnitt hat, auf der Hülse eines Druckstempels angeordnet. Die durch den Druckstempel auf die Bremsbacken ausgeübte Kraft wirkt in Form einer Reaktionskraft der Bremsbacken über geeignete Bauteile der Bremse auf den Kraftsensor ein und verformt die Schenkel des C-Profils. Über Dehnungsmessung sind die Verformung des Rings und daraus mittels eines Dehnungsmesssystems die auf die Bremsbacken einwirkende Kraft bestimmbar. Weitere Anwendungsbereiche für Kraftsensoren, welche einen Kraftring aufweisen, sind bekannt.

Aus der EP 1 980 832 A2 ein auf einer Achse angeordneter Kraftsensor bekannt, an dessen äußerer Mantelflächen durch einen Dehnungskörper mit darauf befindlicher Dehnung-Schaltung angeordnet ist, so dass bei einem axialen Kraftangriff der Dehnungskörper verformt wird. Der Betrieb des Kraftsensors und die Verarbeitung der Sensorsignale der Dehnungsschaltung erfolgt mittels einer externen Detektionseinheit, welche die dafür notwendigen elektronischen Schaltungen aufweist.

Axiale wirkende Kräfte werden auch mit einem Kraftaufnehmer in Form einer deformierbaren Folie ermittelt, welcher an einem Roboterfuß angeordnet ist und dem Ausbalancieren des Fußes dient. Auch hier erfolgt die Verarbeitung der Signale des Kraftaufnehmers durch eine externe Einheit (EP 1 462 784 A1).

Ein Kraftsensor, welcher die elektronischen Komponenten zur Signalverarbeitung auf einer Leiterplatte bereits umfasst, ist aus der EP 2 546 625 A1 bekannt. Dabei ist die Leiterplatte relativ zum Kraftring und den darauf angeordneten Kraftaufnehmern fixiert, indem ein Haltering mit dem Kraftring unter Zwischenlage der bestückten Leiterplatte mittels Schweißen verbunden ist. Ein solcher Aufbau ist aufwendig und reduziert aufgrund des Halteringes und der Schweißverbindung das Herstellungsergebnis und erhöht die Stückkosten.

Es besteht ein Erfordernis, derartige Kraftsensoren als kompaktes Bauelement zur Verfügung zu stellen, welches neben dem Kraftaufnehmer auch die für die Signalerzeugung, Signalvorverarbeitung und/oder Signalverarbeitung erforderliche Elektronik umfasst und die Komponenten vor Umgebungseinflüssen zuverlässig und dauerhaft schützt. Weiter sollen dauerhaft reproduzierbare Messbedingungen gewährleistet sein. Häufig, insbesondere in Automotiv-Anwendungen, sind die mechanischen, thermischen und chemischen Einflüsse sehr harsch.

Weiter ist es gewünscht, die Herstellung hinsichtlich der Materialien, der Menge sowie der Ausstattung der erforderlichen Bauteile und der notwendigen Verfahren kosten- und energieeffektiv zu gestalten.

Es wird eine zur Erfassung einer Messgröße einer Kraft sowie zur Erzeugung eines auf der Messgröße basierenden elektrischen Signals ausgebildete Kraftsensorvorrichtung angegeben, welche als Gehäusekomponenten einen Kraftring und einen Gehäusedeckel aufweisen, wobei letzterer mit dem Kraftring verbunden ist, so dass Kraftring und Gehäusedeckel die elektronischen Komponenten vollständig umschließen. Kraftring und Gehäusedeckel bilden gemeinsam das Gehäuse der Kraftsensorvorrichtung.

Der Kraftring umfasst eine außen liegende Kraftangriffsfläche, an welcher die zu erfassenden Kräfte im Anwendungszustand angreifen, so dass diese aufgenommen und gemessen werden können. Die Kräfte können gemäß obiger Darlegungen zum Stand der Technik in Abhängigkeit von verschiedenen Messbedingungen, wie dem jeweiligen Anwendungsfall und damit verbunden vom Kraftfluss oder der Art und Lage des Kraftaufnehmers in der Kraftsensorvorrichtung, direkt aus dem Kraftfluss abgegriffen werden oder mittels geeigneter Übertragungsmittel auf die Kraftangriffsfläche geleitet werden, für eine indirekte Krafteinleitung.

Der Kraftring umfasst weiter eine innen liegende Aufnahmefläche zur Aufnahme zumindest einer Leiterplatte. Je nach Form des Kraftrings können sich Kraftangriffsfläche und Aufnahmefläche gegenüber liegen, beispielsweise durch die beiden Oberflächen eines plattenförmigen, beispielsweise kreisringförmig ausgebildeten, Kraftrings oder einer Grundplatte des Kraftrings gebildet sein. Alternativ sind jedoch auch andere Formen des Kraftrings möglich, die eine geeignete Aufnahmefläche für die Leiterplatte bieten. Die aktuell bekannten Leiterplatten bieten sehr unterschiedliche Gestaltungen, so dass nicht zwangsläufig eine einzige ebene Fläche in Betracht kommt. So sind vollständig oder teilweise flexible Leiterplatten bekannt, so dass auch gewölbte Aufnahmeflächen oder aus Teilflächen bestehende Aufnahmeflächen geeignet sind, die zudem zueinander geneigt sein können.

Die Begriffe "außen liegend" und "innen liegend" beziehen sich auf die Kraftsensorvorrichtung im Endzustand, d.h. wenn Gehäusedeckel und Kraftring miteinander verbunden sind und einen Hohlraum bilden, in welchem die elektronischen Komponenten liegen. Dieser Hohlraum bildet den Innenraum des Gehäuses, in welchem zwangsläufig auch die Aufnahmefläche liegt. Die Kraftangriffsangriffsfläche liegt dann anschaulich außerhalb, d. h. auf der Außenwandung des Gehäuses.

Der Kraftring, wie im Übrigen auch der Gehäusedeckel, kann in Abhängigkeit vom Messbereich und/oder vom Anwendungsfall aus verschiedenen Materialien bestehen, beispielsweise aus einem metallischen Werkstoff, einem Kunststoff, einer Verbindung von beidem oder anderen.

Die Kraftsensorvorrichtung umfasst weiter die Leiterplatte. Auf der Leiterplatte sind passive und aktive elektronische Komponenten angeordnet, die benötigt werden, um den Kraftaufnehmer zu betreiben sowie ein Signal des Kraftaufnehmers zu empfangen und einer Weiterverarbeitung zuzuführen. Die Weiterverarbeitung kann zumindest teilweise bereits auf der Leiterplatte erfolgen, alternativ teilweise oder vollständig durch externe Vorrichtungen.

Die Leiterplatte ist adhäsiv gemäß Anspruch 1 oder, gemäß einer alternativen Ausgestaltung, nach Anspruch 3, mechanisch auf der Aufnahmefläche fixiert. Beide Varianten sind so ausgeführt, dass eine dauerhafte gleichbleibende Fixierung ohne eine zusätzliche Komponente der Kraftsensorvorrichtung realisiert ist. Bevorzugt erfolgt die Fixierung ohne weiteres Bauteil des Kraftsensors, so dass ein einfacher und kostengünstiger Aufbau des Kraftsensors möglich ist.

Eine unter der Belastung und den thermischen Bedingungen dauerhafte Fixierung der Leiterplatte ist gewünscht, um solche Parameter konstant oder unter Kontrolle zu halten, die in irgendeiner Weise Einfluss auf das Messergebnis haben, wie die Messbedingungen selbst oder die Bedingungen zur Signalübertragung. Letztere sind bei räumlicher Trennung zwischen dem Kraftaufnehmer und der Leiterplatte zu berücksichtigen.

Die Kraftsensorvorrichtung umfasst weiter zumindest ein Sensorelement, nachfolgend als Kraftaufnehmer bezeichnet, welches elektrisch mit der Leiterplatte verbunden ist und derart am Kraftring angeordnet und ausgebildet ist, dass es Verformungen des Kraftrings als Folge einer axial auf den Kraftring wirkenden Kraft erfasst. Optional sind auch mehrere Kraftaufnehmer verwendbar, die separat oder zu Paaren oder zu mehrteiligen Gruppen zusammengefasst verwendet werden können.

Sofern der Kraftsensor mehrere Kraftaufnehmer umfasst, können diese auf dem Kraftring verteilt angeordnet sein. Beispielsweise sind zwei Kraftsensoren so angeordnet, dass sie derselben Stresssituation durch den Kraftring ausgesetzt sind. Damit ist eine redundante Messsituation realisierbar, die durch redundante Schaltungen und Bauelemente auf der Leiterplatte unterstützt sein kann. Zwei, drei, vier oder mehr Kraftaufnehmer haben sich in Abhängigkeit vom Design des Kraftrings als günstig erwiesen, wobei eine Optimierung hinsichtlich Funktionssicherheit und Kosten sinnvoll ist.

Derartige Kraftaufnehmer sind derzeit in verschiedenen Gestaltungen bekannt, beispielsweise piezoelektrische Kraftaufnehmer, resistive Kraftaufnehmer, Federkörper-Kraftaufnehmer oder andere. Zukünftige Weiterentwicklungen von Kraftaufnehmern können analog in die Kraftsensorvorrichtung integriert werden.

Die Lage des Kraftaufnehmers am Kraftring ist zunächst durch dessen Funktion bestimmt und kann in Abhängigkeit von den zur Verfügung stehenden Flächen des Kraftrings dementsprechend variiert werden. Beispielsweise kann er auf der Aufnahmefläche oder einer anderen Fläche platziert werden. Weiter ist es von Vorteil, in Abhängigkeit von der Ausgestaltung des Kraftrings aber nicht zwingend erforderlich, dass der Kraftaufnehmer im Inneren des Gehäuses angeordnet ist. Die Anordnung "am" Kraftring schließt ein, dass der Kraftaufnehmer direkt mit dem Kraftring verbunden ist, so dass die einwirkende Kraft direkt abgreifbar ist, Der Kraftaufnehmer ist nicht auf der Leiterplatte angeordnet, d.h. räumlich von diesem getrennt.

Die Kraftsensorvorrichtung umfasst weiter einen außen liegenden Anschluss zum Abgreifen eines elektrischen Signals. Lage und Design können von der jeweiligen Gestaltung der Kraftsensorvorrichtung und/oder der Einbausituation während der Verwendung abhängen. Eine Quelle des Signals ist aufgrund der Zweckbestimmung der Kraftsensorvorrichtung anschaulich die Leiterplatte.

Die beschriebene Kraftsensorvorrichtung benötigt neben den elektronischen Komponenten, Kraftaufnehmer, Leiterplatte und dem elektrischen Außenanschluss nur zwei weitere Komponenten, welche als Gehäusebauteile dienen, den Kraftring und den Gehäusedeckel. Diese umschließen die elektronischen Komponenten und sichern sie gleichzeitig in ihrer Lage zum Kraftring. Damit konnte der Material-, Energie- und Herstellungsaufwand für ein vollständig umschlossenes und geschütztes Messsystem gegenüber dem Stand der Technik wesentlich reduziert werden. Es sind Vorfertigungsprozesse möglich, die zwei Bauteilgruppen bereitstellen, welchen in einem abschließenden Fügeprozess miteinander verbunden werden können.

Die erste Bauteilgruppe besteht aus dem Kraftring mit dem Kraftaufnehmer und der auf der Aufnahmefläche des Kraftrings fixierten Leiterplatte. Die zweite Bauteilgruppe umfasst den Gehäusedeckel.

Der Gehäusedeckel verschließt die Kraftsensorvorrichtung zum Schutz der innenliegenden Bauteile vor schädigenden und/oder die Messung störenden Einflüssen der Umgebung. Der Gehäusedeckel ist, optional unter Verwendung einer oder mehrerer Dichtungen, mit dem Kraftring verbunden, so dass Kraftring und Gehäusedeckel die Leiterplatte umschließen. Gehäusedeckel und Kraftring bilden so ein geschlossenes, optional dichtes Gehäuse.

Der Gehäusedeckel kann aus verschiedenen Materialien bestehen und geeignete Formen aufweisen, die für die Schutzfunktion und für den Anwendungsfall des Kraftsensors geeignet sind.

Der Gehäusedeckel, optional oder ergänzend auch der Kraftring, kann einen außen liegenden elektrischen Anschluss aufweisen, zum elektrischen Anschluss der Kraftsensorvorrichtung beispielsweise an externe Steuereinrichtungen, Anzeigen oder andere Einrichtungen. Das Anschlussdesign korreliert mit innen liegenden Kontakten, die beispielsweise auf der Leiterplatte ausgeführt sein können. Es sind die bekannten Anschlussausführungen verwendbar, wie Federkontakte, Kontaktpads, Buchsen und Stecker usw. verwendbar. Alternativ kann auch ein nicht lösbareres Anschlusskabel, das flexibel sein kann, angeordnet sein.

Die alternative adhäsive Fixierung der Leiterplatte auf der Aufnahmefläche der beschriebenen Kraftsensorvorrichtung kann beispielsweise durch vollflächiges oder teilweises Kleben der Leiterplatte auf der Aufnahmefläche erfolgen, beispielsweise mittels flexiblen Klebers, oder mittels geeigneter Haltemittel des Kraftringes, mit deren Hilfe die Leiterplatte auf die Aufnahmefläche gepresst wird. Auch eine Kombination von beidem ist möglich.

Die oben angeführte Fixierung der Leiterplatte auf der Aufnahmefläche kann neben der mechanischen Verbindung auch die Sicherung der Lage der Leiterplatte relativ zur Aufnahmefläche einschließen. Die Sicherung der Lage kann beispielsweise bei der Gefahr des Verschiebens infolge einer seitlichen, parallel zur Aufnahmefläche verlaufenden Kraftkomponente erforderlich sein. Eine solche Kraftkomponente ist beispielsweise bei einem Kraftangriff, der eine Torsionskomponente aufweist, vorhanden. Für solche Situationen kann der Kraftring geeignete Haltemittel aufweisen, die eine mechanische Verschiebe- und/oder Verdrehsicherung der Leiterplatte realisieren. Solche Sicherungen bieten regelmäßig Flächen, die an einer Kante der Leiterplatte anliegen, so dass deren Verschiebung in Richtung der betreffenden Fläche verhindert wird. Beispielsweise können mehrere Stifte oder andere Erhebungen auf der Aufnahmefläche angeordnet sein, die in korrespondierende Ausnehmungen in der Leiterplatte eingreifen.

In vergleichbarer Weise kann auch die Kraftsensorvorrichtung insgesamt in einer Einbauposition gegen ein Verdrehen gesichert werden, das durch eine Torsionskomponente der angreifenden Kraft verursacht wird. Zu diesem Zweck kann in einer weiteren Ausgestaltung die Kraftsensorvorrichtung an einer ihrer seiner äußeren Wandungsflächen geeignete Mittel zur Sicherung einer Position der Kraftsensorvorrichtung, nachfolgend als Positionierungsmittel bezeichnet, aufweisen. Das Positionierungsmittel kann beispielsweise auf dem Gehäusedeckel angeordnet sein. Sofern vom Design der äußeren Wandungsflächen sowie der Einbausituation der Kraftsensorvorrichtung unterstützt und für die Messungen tolerierbar, sind auch andere Orte des Positionierungsmittels nutzbar. Ein solches Positionierungsmittel kann ein Dorn sein, an welchen eine externe Halterung, die nicht Teil der Kraftsensorvorrichtung ist, angreift. Weitere geeignete Positionierungsmittel sind alternativ oder ergänzend möglich. Umfasst die Kraftsensorvorrichtung ein Verbindungsmittel, wie nachfolgend beschrieben, kann auch dieses ein solches Positionierungsmittel aufweisen.

Die Form des Kraftrings mit innen liegender Aufnahmefläche und außen liegender Kraftangriffsfläche kann sehr variabel gestaltet sein. Entsprechend verschiedener Ausgestaltungen der Kraftsensorvorrichtung kann der Kraftring, wie oben bereits beispielhaft dargelegt, als Platte ausgebildet sein, deren beide gegenüber liegende Oberfläche die Kraftangriffsfläche und die Aufnahmefläche bilden. Alternativ kann der Kraftring einen trog-förmigen Querschnitt aufweisen. Beide Varianten unterstützen die kostengünstige und effektive Herstellung sowie eine automatisierte und reproduzierbare Verbindung der Leiterplatte mit dem Kraftring. In der trog-formigen Ausgestaltung des Kraftrings kann die Aufnahmefläche die innere Bodenfläche des Troges sein, wodurch die Fixierung und Lagesicherung der Leiterplatte durch die aufsteigenden Seitenwände des Troges unterstützt werden kann.

Der Kraftaufnehmer kann auf einer im Inneren des Gehäuses befindlichen Fläche des Kraftrings liegend oder optional auf einer für einen oder mehrere Kraftaufnehmer gestalteten Fläche angeordnet sein. So kann in verschiedenen Ausgestaltungen des Kraftrings die Aufnahmefläche derart ausgebildet sein, dass ein Abschnitt der Aufnahmefläche zur Aufnahme zumindest eines Kraftaufnehmers eine Podestfläche bildet, welche über der umgebenden Aufnahmefläche liegt, und/oder zumindest ein Abschnitt der Aufnahmefläche eine Neigung im Bereich von 0 < β ≤ 1° zur umgebenden Aufnahmefläche aufweist. Bereits Neigungen im Bereich 0 < β ≤ 0,8° oder bis kleiner oder gleich 0,5° haben einen Einfluss auf das Messergebnis gezeigt.

Derartige Podeste oder Rampen können ein oder mehrere, letzteres insbesondere für redundant genutzte, Kraftaufnehmer aufnehmen. Die Podeste oder Rampen können gleichzeitig für die Lagesicherung der Leiterplatte verwendet werden. Es hat sich zudem herausgestellt, dass mittels der Anordnung der Kraftaufnehmer auf einem Podest und/oder mit einer geringen Neigung zur Aufnahmefläche die Empfindlichkeit der Messung positiv beeinflusst werden kann. Mit den bekannten Herstellungsverfahren sind die Neigungen von Flächen sehr präzise im Zehntelgrad-Bereich herzustellen, so dass auch Zwischenstufen innerhalb des genannten Winkelbereichs verwendbar sind.

Verschiedene weitere Ausgestaltungen unterstützen die Verbindung des Kraftrings mit dem Gehäusedeckel, so dass die oben beschriebenen variablen Gestaltungen des Kraftrings und ebenso variable Formen des Gehäusedeckels nutzbar sind. So kann die Verbindung des Kraftrings mit dem Gehäusedeckel mittels eines Verbindungsmittels realisiert sein, welches am Kraftring oder am Gehäusedeckel angeordnet ist oder als eine separate Komponente der Kraftsensorvorrichtung ausgebildet ist. Ein solches Verbindungsmittel kann in Form und/oder Material speziell auf das Verbindungsverfahren abgestimmt sein, so dass die Materialien für Kraftring und/oder Gehäusedeckel entsprechend deren primärer Funktion ausgewählt werden können. Zudem kann ein solches Verbindungsmittel den Bauraum im Gehäuse vergrößern und zumindest in Grenzen bei abweichender Gestalt von Kraftring und Gehäusedeckel vermitteln.

Die Verbindung des Kraftringes mit dem Gehäusedeckel kann durch bekannte Verfahren, beispielsweise durch Kleben, Schweißen, Kaltverformung, letzteres beispielsweise durch Bördeln, oder mit einem anderen bekannten und geeigneten Verfahren erfolgen. Sofern ein Verbindungsmittel verwendet wird, erfolgt die Verbindung anschaulich jeweils zwischen einem der folgenden Elemente: Kraftring, Gehäusedeckel und Verbindungsmittel, und einem anderen dieser Elemente. Als geeignete Verfahren kommen solche in Betracht, die nur thermische, mechanische und chemische Belastung darstellen, welche weder die elektronischen Komponenten an sich noch deren Anordnung und Fixierung in der Kraftsensorvorrichtung infolge der Verbindung relevant verändern.

Die oben beschriebene Kraftsensorvorrichtung ist zur Messung von Kräften im Bereich von größer 0 bis 50 kN geeignet, wobei Optimierungen der verwendeten Komponenten und weitere Entwicklungen, beispielsweise hinsichtlich der verwendeten Materialien oder der Kraftaufnehmer, die Kraftsensorvorrichtung auch für größere Kräfte anwendbar machen kann.

Nachfolgend soll die Erfindung anhand von Ausführungsbeispielen näher erläutert werden. Die zugehörigen Zeichnungen zeigen in
Fig. 1A eine Sprengdarstellung einer Ausführungsform einer Kraftsensorvorrichtung, mit der Ansicht von unten und
Fig. 1B Ausführungsform einer Kraftsensorvorrichtung nach Fig. 1A in Sprengdarstellung in der Ansicht von oben;
Fig. 2 eine perspektivische Darstellung einer weiteren Ausführungsform einer Kraftsensorvorrichtung;
Fig. 3 eine perspektivische Darstellung einer weiteren Ausführungsform einer Kraftsensorvorrichtung; und
Fig. 4 eine Schnittdarstellung von Details eines Kraftringes mit einer darauf angeordneten Leiterplatte.

Die Zeichnungen und die nachfolgenden Darlegungen beschreiben die zu vor offenbarte Kraftsensorvorrichtung zum besseren Verständnis nur schematisch. Sie erheben keinen Anspruch auf Vollständigkeit und/oder Maßstäblichkeit der Darstellungen. Gleiche Bezugszeichen in den Zeichnungen kennzeichnen gleiche funktionale Elemente. Die Ausführungsformen und Details sind lediglich beispielhaft und nicht beschränkend anzusehen. Der Fachmann würde die dargestellten und zuvor beschriebenen Merkmale in weiteren Ausführungsformen in anderer Weise kombinieren oder modifizieren, soweit es ihm sinnvoll erscheint.

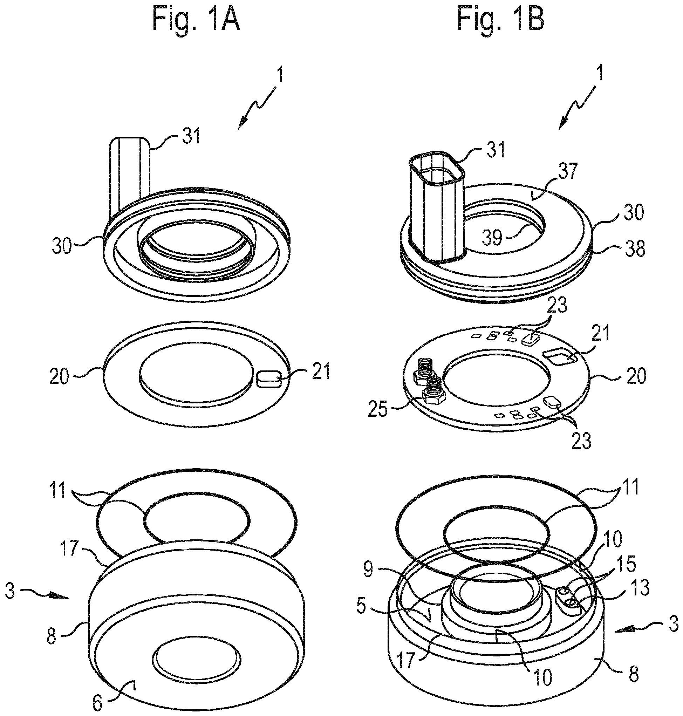

Die nachfolgende Beschreibung der Fig. 1A und Fig. 1B bezieht sich wegen der besseren Darstellbarkeit stets auf Fig. 1B, sofern nicht ausdrücklich auf Fig. 1A verwiesen wird.

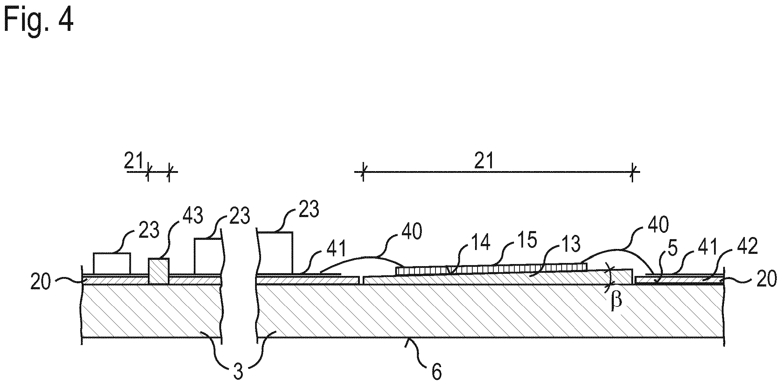

Der Kraftsensor 1 in den Fig. 1A und Fig. 1B umfasst einen Kraftring 3 mit einem trog-förmigen Querschnitt. Dessen innere Bodenfläche ist die Aufnahmefläche 5, dessen äußere Bodenfläche die Kraftangriffsfläche 6 (Fig. 1A). Die zylinderförmige äußere Wandung 8 und die zylinderförmige innere Wandung 9 weisen Dichtflächen 10 auf, zur Aufnahme von ringförmigen Dichtringen 11, einem inneren und einem äußeren. Auf der Aufnahmefläche 5 sind auf einem gemeinsamen Podest 13 zwei Kraftaufnehmer 15 benachbart zueinander angeordnet. Die Podestfläche, auf welcher die Kraftaufnehmer 15 angeordnet sind, kann einen Winkel β zur Aufnahmefläche 5 im Bereich von 0° < β ≤ 1° (dargestellt in Fig. 4), beispielsweise von 0,5° aufweisen. Beide Kraftaufnehmer 15 werden redundant betrieben, indem sie derselben Kräftesituation/Stresssituation ausgesetzt sind.

Die äußere Wandung 8 des Kraftringes weist an ihrem oberen Ende ein kalt verformbares, ringförmiges Verbindungsmittel 17 auf.

Auf die Aufnahmefläche 5 ist eine ringförmige Leiterplatte 20 flächig mittels flexiblen Klebers 42 (dargestellt in Fig. 4) befestigt. Dazu korreliert die Geometrie der Leiterplatte 20 mit der Geometrie der Aufnahmefläche 5 und weist im Bereich des Podestes 13 eine Ausnehmung 21 auf, durch welche im montierten Zustand das Podest 13 ragt.

Beidseitig der Ausnehmung 21 sind elektronische Bauelemente 23 von zwei Schaltungen angeordnet, jeweils eine für jeden der beiden Kraftaufnehmer 15. Deren elektrische Verbindung zur jeweiligen Schaltung kann beispielsweise mittel Drahtbrücken 41 (dargestellt in Fig. 4) erfolgen.

Im Ausführungsbeispiel sind Kontakte 25, z. B. Federkontakte, ausgebildet, welche zu den Schaltungen beabstandet und mit Letzteren mittels auf der Leiterplatte 20 ausgebildeter Leitungsstrukturen 41 verbunden sind (dargestellt in Fig. 4).

Nach oben abgeschlossen wird die Kraftsensorvorrichtung 1 durch einen ringförmigen Gehäusedeckel 30, der ebenfalls eine äußere Mantelfläche 38 und eine innere Mantelfläche 39. Beide Mantelflächen 38, 39 korrespondieren den Dichtflächen 10 der äußeren und inneren Wandung 8, 9 des Kraftrings 3, so dass die Mantelflächen 38, 39 im montierten Zustand über jeweils einen Dichtring 11 mit dem Kraftring 3 verbunden ist.

Der Gehäusedeckel weist weiter einen Stecker 31 auf, der als außen liegender Anschluss der Kraftsensorvorrichtung 1 dient und der mit den Kontakten 25 auf der Leiterplatte 20 korreliert.

Zum Zusammenbau des Kraftsensors 1 wird die Leiterplatte 20 wie oben beschrieben auf die Aufnahmefläche 5 geklebt, die Dichtungsringe 11 im Gehäuse auf die jeweiligen Dichtflächen 10 der inneren und der äußeren Wandung 8, 9 des Kraftrings 3 aufgelegt und abschließend der Gehäusedeckel 30 aufgesetzt, wobei die äußere und innere Wandung 38, 39 des Gehäusedeckels 30 auf den Dichtungsringen 11 aufliegen und die äußere Wandung 38 von dem Verbindungsmittel 17 des Kraftrings 3 umgeben ist. Durch Kaltverformung wird das, z.B. metallische, Verbindungsmittel 17 mit dem Gehäusedeckel 30 verpresst, so dass es dessen Deckfläche 37 im Randbereich überdeckt (Bördeln).

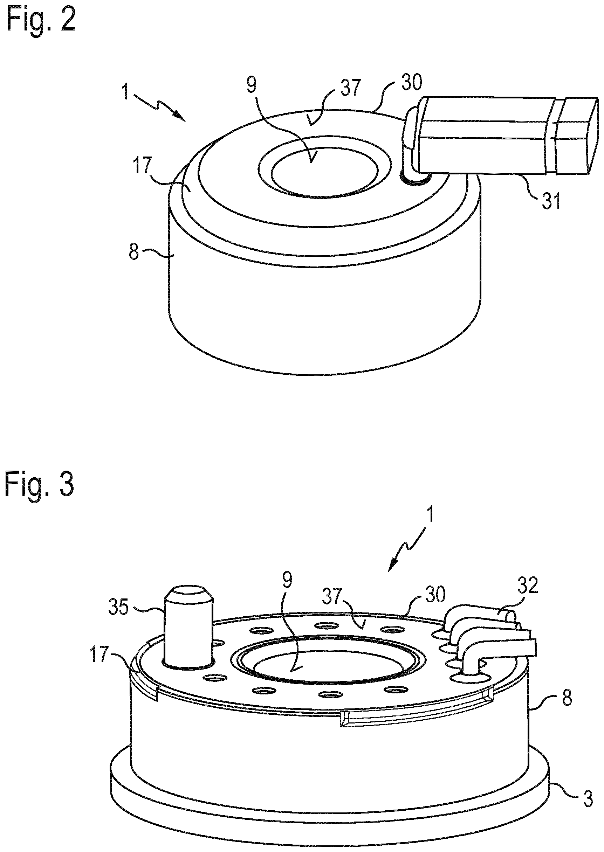

Fig. 2 zeigt eine perspektivische Ansicht einer solchen Kraftsensorvorrichtung 1, die sich von dem der Fig. 1A und 1B durch eine abgewinkelte Gestaltung des Steckers 31 unterscheidet. Im Übrigen wird auf die Beschreibung zu Fig. 1A und Fig. 1B verwiesen.

Fig. 3 zeigt eine perspektivische Ansicht einer alternativen Ausführungsform einer Kraftsensorvorrichtung 1. Sie unterscheidet sich von der in den Fig. 1A und Fig. 1B unter anderem durch die Ausführung des elektrischen Anschlusses der Kraftsensorvorrichtung 1. Anstelle eines Steckers weist diese Kraftsensorvorrichtung 1 mehrere, fest mit dem Gehäusedeckel 30 verbundene Anschlusskabel 32 sowie auf der Deckfläche 37 des Gehäusedeckels 30 ein Positionierungsmittel 35 in Form eines Dorns auf. Die Anschlusskabel 32 können auch auf andere bekannte und geeignete Weise ausgeführt sein. Beispielsweise können die einzelnen Anschlusskabel 32 als flexible Mantelleitung aus dem Gehäuse herausgeführt werden.

Fig. 4 zeigt einen Ausschnitt eines Kraftrings 3 in Schnittdarstellung. Der Kraftring 3 weist eine plattenförmige Grundfläche auf mit einer unten liegenden Kraftangriffsfläche 6 und einer der Kraftangriffsfläche 6 gegenüber und damit oben liegenden Aufnahmefläche 5. Auf der Aufnahmefläche 5 ist eine Leiterplatte 20 mittels Kleber 42 vollflächig oder teilweise verklebt.

Die Leiterplatte 20 weist mehrere Ausnehmungen 21 auf. Durch eine der Ausnehmungen 21 ragt ein Podest 13, dessen Podestfläche 14 einen Winkel β von 0,8° aufweist. Auf der Podestfläche 14 ist ein Kraftaufnehmer 15 angeordnet. Dieser ist mittels Drahtbrücken 40 mit Leitungsstrukturen 41 einer elektronischen Schaltung 23, dargestellt durch Bauelemente, verbunden.

Durch eine weitere Ausnehmung 21 in der Leiterplatte 20 ragt Haltemittel 43 in Form eines Stifts, welches die Leiterplatte 20 gegen ein Verdrehen sichert.

### Bezugszeichenliste

- 1: Kraftsensorvorrichtung
- 3: Kraftring
- 5: Aufnahmefläche
- 6: Kraftangriffsfläche
- 8: äußere Wandung
- 9: innere Wandung
- 10: Dichtfläche
- 11: Dichtring
- 13: Podest
- 14: Podestfläche
- 15: Kraftaufnehmer
- 17: Verbindungsmittel
- 20: Leiterplatte
- 21: Ausnehmung
- 23: elektronische Schaltung
- 25: Kontakt
- 30: Gehäusedeckel
- 31: Anschluss, Stecker
- 32: Anschlusskabel
- 35: Positionierungsmittel
- 37: Deckfläche
- 38: äußere Mantelfläche
- 39: innere Mantelfläche
- 40: Drahtbrücken
- 41: Leitungsstruktur
- 42: Kleber
- 43: Haltemittel

## Patentansprüche

1. Kraftsensorvorrichtung (1), welche ausgebildet ist zur Erfassung einer Messgröße einer Kraft sowie Erzeugung eines auf der Messgröße basierenden elektrischen Signals und welche folgende Elemente umfasst:
- einen Kraftring (3), welcher eine, bezogen auf die Kraftsensorvorrichtung (1), außen liegende Kraftangriffsfläche (6) zur Aufnahme der zu erfassenden Kräfte und eine, bezogen auf die Kraftsensorvorrichtung (1), innen liegende Aufnahmefläche (5) umfasst;
- eine Leiterplatte (20), auf welcher passive und aktive elektronische Komponenten angeordnet sind;
- zumindest ein Sensorelement, nachfolgend als Kraftaufnehmer (15) bezeichnet, welches elektrisch mit der Leiterplatte (20) verbunden ist und derart am Kraftring (3) angeordnet und ausgebildet ist, dass es Verformungen des Kraftrings (3) als Folge einer axial auf den Kraftring (3) wirkenden Kraft erfasst;
- einen Gehäusedeckel (30), welcher unter Verwendung zumindest einer Dichtung mit dem Kraftring (3) verbunden ist, so dass Kraftring (3) und Gehäusedeckel (30) die Leiterplatte (20) und den Kraftaufnehmer (15) umschließen; und
- einen außen liegenden Anschluss (31, 32) zum Abgreifen eines elektrischen Signals;
**dadurch gekennzeichnet, dass** die Leiterplatte (20) adhäsiv auf der Aufnahmefläche (5) fixiert ist.

2. Kraftsensorvorrichtung (1) nach Anspruch 1, **dadurch gekennzeichnet, dass** die Leiterplatte (20) durch teilweises oder vollständiges Kleben auf der Aufnahmefläche (5) fixiert ist.

3. Kraftsensorvorrichtung (1), welche ausgebildet ist zur Erfassung einer Messgröße einer Kraft sowie Erzeugung eines auf der Messgröße basierenden elektrischen Signals und welche folgende Elemente umfasst:
- einen Kraftring (3), welcher eine, bezogen auf die Kraftsensorvorrichtung (1), außen liegende Kraftangriffsfläche (6) zur Aufnahme der zu erfassenden Kräfte und eine, bezogen auf die Kraftsensorvorrichtung (1), innen liegende Aufnahmefläche (5) umfasst;
- eine Leiterplatte (20), auf welcher passive und aktive elektronische Komponenten angeordnet sind;
- zumindest ein Sensorelement, nachfolgend als Kraftaufnehmer (15) bezeichnet, welches elektrisch mit der Leiterplatte (20) verbunden ist und derart am Kraftring (3) angeordnet und ausgebildet ist, dass es Verformungen des Kraftrings (3) als Folge einer axial auf den Kraftring (3) wirkenden Kraft erfasst;
- einen Gehäusedeckel (30), welcher unter Verwendung zumindest einer Dichtung mit dem Kraftring (3) verbunden ist, so dass Kraftring (3) und Gehäusedeckel (30) die Leiterplatte (20) und den Kraftaufnehmer (15) umschließen; und
- einen außen liegenden Anschluss (31, 32) zum Abgreifen eines elektrischen Signals;
**dadurch gekennzeichnet, dass** die Leiterplatte (20) mittels des Kraftrings (3) und des Gehäusedeckels (30) mechanisch auf der Aufnahmefläche (5) fixiert ist.

4. Kraftsensorvorrichtung (1) nach einem der Ansprüche 1 bis 3, **dadurch gekennzeichnet, dass** der Kraftring (3) zumindest ein Haltemittel (43) aufweist zur Fixierung der Leiterplatte (20) auf der Aufnahmefläche (5).

5. Kraftsensorvorrichtung (1) nach Anspruch 1 bis 4, **dadurch gekennzeichnet, dass** der Kraftring (3) zumindest ein Haltemittel (43) aufweist zur Sicherung der Lage der Leiterplatte (20) relativ zur Aufnahmefläche (5).

6. Kraftsensorvorrichtung (1) nach einem der vorstehenden Ansprüche,
**dadurch gekennzeichnet, dass** der Kraftring (3) ausgebildet ist
- als Platte, deren beide gegenüber liegende Oberfläche die Kraftangriffsfläche (6) und die Aufnahmefläche (5) bilden, oder
- mit einem trog-förmigen Querschnitt.

7. Kraftsensorvorrichtung (1) nach einem der Ansprüche 1 bis 5, **dadurch gekennzeichnet, dass** der Kraftring (3) mit einem trog-förmigen Querschnitt und die Aufnahmefläche (5) als eine ebene, innere Bodenfläche des Troges ausgebildet ist.

8. Kraftsensorvorrichtung (1) nach einem der vorstehenden Ansprüche, **dadurch gekennzeichnet, dass** die Aufnahmefläche (5) derart ausgebildet ist, dass ein Abschnitt der Aufnahmefläche (5) zur Aufnahme zumindest eines Kraftaufnehmers (15) eine über der umgebenden Aufnahmefläche (5) liegende Podestfläche (14) bildet.

9. Kraftsensorvorrichtung (1) nach einem der vorstehenden Ansprüche, **dadurch gekennzeichnet, dass** die Aufnahmefläche (5) derart ausgebildet ist, dass zumindest ein Abschnitt der Aufnahmefläche (5) eine Neigung im Bereich von 0 < β ≤ 1° zur umgebenden Aufnahmefläche (5) aufweist.

10. Kraftsensorvorrichtung (1) nach einem der vorstehenden Ansprüche, **dadurch gekennzeichnet, dass** der Kraftring (3) mit dem Gehäusedeckel (30) mittels eines Verbindungsmittels (17) verbunden ist, welches am Kraftring (3) oder am Gehäusedeckel (30) angeordnet ist oder als eine separate Komponente der Kraftsensorvorrichtung (1) ausgebildet ist.

11. Kraftsensorvorrichtung (1) nach einem der vorstehenden Ansprüche, **dadurch gekennzeichnet, dass** eines der Elemente aus der Liste Kraftring (3), Gehäusedeckel (30), Verbindungsmittel (17) mit einem anderen Element aus dieser Liste durch Kleben, Schweißen oder Kaltverformung verbunden ist.

12. Kraftsensorvorrichtung (1) nach einem der vorstehenden Ansprüche, **dadurch gekennzeichnet, dass** die Kraftsensorvorrichtung (1) an einer seiner äußeren Wandungsflächen Mittel zur Sicherung einer Position der Kraftsensorvorrichtung, nachfolgend als Positionierungsmittel (35) bezeichnet, in einer Einbauposition aufweist.

## Claims

1. Force sensor apparatus (1) which is designed to detect a measurement variable of a force and generate an electrical signal based on the measurement variable and which comprises the following elements:
- a force ring (3) which comprises a force engagement surface (6) situated on the outside, with respect to the force sensor apparatus (1), for absorbing the forces to be detected and an absorbing surface (5) situated on the inside, with respect to the force sensor apparatus (1);
- a printed circuit board (20) on which passive and active electronic components are arranged;
- at least one sensor element, referred to as force pickup (15) below, which is electrically connected to the printed circuit board (20) and is arranged on the force ring (3) and designed in such a way that it detects deformations of the force ring (3) as a result of a force acting axially on the force ring (3);
- a housing cover (30) which is connected to the force ring (3) using at least one seal, so that the force ring (3) and the housing cover (30) enclose the printed circuit board (20) and the force pickup (15); and
- a connection (31, 32), situated on the outside, for tapping off an electrical signal;
**characterized in that** the printed circuit board (20) is adhesively fixed on the absorbing surface (5).

2. Force sensor apparatus (1) according to Claim 1, **characterized in that** the printed circuit board (20) is fixed by partial or complete adhesive bonding on the absorbing surface (5).

3. Force sensor apparatus (1) which is designed to detect a measurement variable of a force and generate an electrical signal based on the measurement variable and which comprises the following elements:
- a force ring (3) which comprises a force engagement surface (6) situated on the outside, with respect to the force sensor apparatus (1), for absorbing the forces to be detected and an absorbing surface (5) situated on the inside, with respect to the force sensor apparatus (1);
- a printed circuit board (20) on which passive and active electronic components are arranged;
- at least one sensor element, referred to as force pickup (15) below, which is electrically connected to the printed circuit board (20) and is arranged on the force ring (3) and designed in such a way that it detects deformations of the force ring (3) as a result of a force acting axially on the force ring (3);
- a housing cover (30) which is connected to the force ring (3) using at least one seal, so that the force ring (3) and the housing cover (30) enclose the printed circuit board (20) and the force pickup (15); and
- a connection (31, 32), situated on the outside, for tapping off an electrical signal;
**characterized in that** the printed circuit board (20) is mechanically fixed on the absorbing surface (5) by means of the force ring (3) and the housing cover (30).

4. Force sensor apparatus (1) according to one of Claims 1 to 3, **characterized in that** the force ring (3) has at least one holding means (43) for fixing the printed circuit board (20) on the absorbing surface (5).

5. Force sensor apparatus (1) according to Claims 1 to 4, **characterized in that** force ring (3) has at least one holding means (43) for securing the position of the printed circuit board (20) relative to the absorbing surface (5).

6. Force sensor apparatus (1) according to one of the preceding claims, **characterized in that** the force ring (3) is designed
- as a plate, the two opposite surfaces of which form the force engagement surface (6) and the absorbing surface (5), or
- with a trough-like cross section.

7. Force sensor apparatus (1) according to one of Claims 1 to 5, **characterized in that** the force ring (3) is designed with a trough-like cross section and the absorbing surface (5) is designed as a planar, inner bottom surface of the trough.

8. Force sensor apparatus (1) according to one of the preceding claims, **characterized in that** the absorbing surface (5) is designed in such a way that a portion of the absorbing surface (5) for absorbing at least one force pickup (15) forms a platform surface (14) situated above the surrounding absorbing surface (5).

9. Force sensor apparatus (1) according to one of the preceding claims, **characterized in that** the absorbing surface (5) is designed in such a way that at least one portion of the absorbing surface (5) has an inclination in the range of from 0 ≤ β ≤ 1° in relation to the surrounding absorbing surface (5).

10. Force sensor apparatus (1) according to one of the preceding claims, **characterized in that** the force ring (3) is connected to the housing cover (30) by means of a connecting means (17) which is arranged on the force ring (3) or on the housing cover (30) or is designed as a separate component of the force sensor apparatus (1).

11. Force sensor apparatus (1) according to one of the preceding claims, **characterized in that** one of the elements on the list consisting of force ring (3), housing cover (30) and connecting means (17) is connected to another element from this list by adhesive bonding, welding or cold deformation.

12. Force sensor apparatus (1) according to one of the preceding claims, **characterized in that** the force sensor apparatus (1) has, on one of its outer wall surfaces, means for securing a position of the force sensor apparatus, referred to as positioning means (35) below, in an installation position.

## Revendications

1. Dispositif de détection de force (1) qui est conçu pour détecter une grandeur de mesure d'une force et pour générer un signal électrique basé sur la grandeur de mesure et qui comprend les éléments suivants :
- une bague de force (3) qui comprend une surface d'application de force (6) située à l'extérieur par rapport au dispositif de détection de force (1) et destinée à recevoir les forces à détecter et une surface de réception (5) située à l'intérieur par rapport au dispositif de détection de force (1) ;
- une carte de circuit imprimé (20) sur laquelle sont disposés des composants électroniques passifs et actifs ;
- au moins un élément de détection, désigné ci-après par transducteur de force (15), qui est relié électriquement à la carte de circuit imprimé (20) et qui est disposé sur la bague de force (3) et conçu de manière à détecter des déformations de la bague de force (3) dues à une force agissant axialement sur la bague de force (3) ;
- un couvercle de boîtier (30) qui est relié à la bague de force (3) à l'aide d'au moins une garniture d'étanchéité de sorte que la bague de force (3) et le couvercle de boîtier (30) enferment la carte de circuit imprimé (20) et le capteur de force (15) ; et
- une connexion extérieure (31, 32) destinée à prélever un signal électrique ;
**caractérisé en ce que** la carte de circuit imprimé (20) est fixée par collage sur la surface de réception (5).

2. Dispositif de détection de force (1) selon la revendication 1, **caractérisé en ce que** le circuit imprimé (20) est fixé sur la surface de réception (5) par collage partiel ou total.

3. Dispositif de détection de force (1) qui est conçu pour détecter une grandeur de mesure d'une force et pour générer un signal électrique basé sur la grandeur de mesure et qui comprend les éléments suivants :
- une bague de force (3) qui comprend une surface d'application de force (6) située à l'extérieur par rapport au dispositif de détection de force (1) et destinée à recevoir les forces à détecter et une surface de réception (5) située à l'intérieur par rapport au dispositif de détection de force (1) ;
- une carte de circuit imprimé (20) sur laquelle sont disposés des composants électroniques passifs et actifs ;
- au moins un élément de détection, désigné ci-après par transducteur de force (15), qui est relié électriquement à la carte de circuit imprimé (20) et qui est disposé sur la bague de force (3) et conçu de manière à détecter des déformations de la bague de force (3) dues à une force agissant axialement sur la bague de force (3) ;
- un couvercle de boîtier (30) qui est relié à la bague de force (3) à l'aide d'au moins une garniture d'étanchéité de sorte que la bague de force (3) et le couvercle de boîtier (30) enferment la carte de circuit imprimé (20) et le capteur de force (15) ; et
- une connexion extérieure (31, 32) destinée à prélever un signal électrique ;
**caractérisé en ce que** la carte de circuit imprimé (20) est fixée mécaniquement sur la surface de réception (5) à l'aide de la bague de force (3) et du couvercle de boîtier (30).

4. Dispositif de détection de force (1) selon l'une des revendications 1 à 3, **caractérisé en ce que** la bague de force (3) comporte au moins un moyen de retenue (43) destiné à fixer la carte de circuit imprimé (20) sur la surface de réception (5).

5. Dispositif de détection de force (1) selon la revendication 1 à 4, **caractérisé en ce que** la bague de force (3) comporte au moins un moyen de retenue (43) destiné à assurer la position de la carte de circuit imprimé (20) par rapport à la surface de réception (5).

6. Dispositif de détection de force (1) selon l'une des revendications précédentes,
**caractérisé en ce que** la bague de force (3) est conçue
- comme une plaque dont les deux surfaces opposées forment la surface d'application de force (6) et la surface de réception (5), ou
- avec une section transversale en forme d'auge.

7. Dispositif de détection de force (1) selon l'une des revendications 1 à 5, **caractérisé en ce que** la bague de force (3) est conçue avec une section transversale en forme d'auge et la surface de réception (5) est conçue comme une surface de fond intérieure plane de l'auge.

8. Dispositif de détection de force (1) selon l'une des revendications précédentes, **caractérisé en ce que** la surface de réception (5) est conçue de telle sorte qu'une portion de la surface de réception (5) destinée à recevoir au moins un transducteur de force (15) forme une surface de socle (14) située au-dessus de la surface de réception (5) environnante.

9. Dispositif de détection de force (1) selon l'une des revendications précédentes, **caractérisé en ce que** la surface de réception (5) est conçue de telle sorte qu'au moins une portion de la surface de réception (5) présente une inclinaison de l'ordre de 0 < β ≤ 1° par rapport à la surface de réception (5) environnante.

10. Dispositif de détection de force (1) selon l'une des revendications précédentes, **caractérisé en ce que** la bague de force (3) est reliée au couvercle du boîtier (30) à l'aide d'un moyen de liaison (17) qui est disposé sur la bague de force (3) ou sur le couvercle de boîtier (30) ou qui est conçu comme un composant séparé du dispositif de détection de force (1) .

11. Dispositif de détection de force (1) selon l'une des revendications précédentes, **caractérisé en ce que** l'un des éléments de la liste comprenant la bague de force (3), le couvercle de boîtier (30) et le moyen de liaison (17) est relié à un autre élément de cette liste par collage, soudage ou déformation à froid.

12. Dispositif de détection de force (1) selon l'une des revendications précédentes,
**caractérisé en ce que** le dispositif de détection de force (1) comporte sur l'une de ses surfaces de paroi extérieures des moyens destinés à assurer une position du dispositif de détection de force, désignés ci-après par moyens de positionnement (35), dans une position de montage.
